# EUROPÄISCHE PATENTSCHRIFT

(11) **EP 1 134 149 B1**
(45) Veröffentlichungstag und Bekanntmachung des Hinweises auf die Patenterteilung: **23.07.2003**
(21) Anmeldenummer: 01105322.0
(22) Anmeldetag: 07.03.2001
(51) Int. Cl.: B62D 25/07, B62D 33/06, B60R 13/07

(54) **Kraftfahrzeug mit Kondenswassersammel- und ableitsystem**
Motor vehicle with condensation water drain system
Véhicule à moteur avec système de drainage des eaux de condensation

(30) Priorität: 14.03.2000 DE 10012351
(43) Veröffentlichungstag der Anmeldung: 19.09.2001
(73) Patentinhaber: MAN Steyr AG, 4400 Steyr (AT)
(72) Erfinder: Schönegger-Fösleitner, Erich, 4400 Steyr (AT); Stockinger, Herbert, 4400 Steyr (AT); Watzek, Gerhard, Dipl.-Ing., 80935 München (DE); Arnberger, Alois, 4400 Steyr (AT)

(56) Entgegenhaltungen:
- US-A- 4 445 721
- US-A- 4 867 073
- US-A- 5 022 704

## Beschreibung

Die Erfindung betrifft ein Kraftfahrzeug, insbesondere einen Lastkraftwagen, dessen Dach und daran nach unten anschließende Außenwandabschnitte durch Innenverkleidungsteile abgedeckt sind.

Der Erfindung liegt folgende Problematik zugrunde. Innenwandverkleidungsteile dienen in der Regel der Wärmedämmung und bestehen aus Baumwollfaservlies oder ähnlichen Materialien. Vor allem bei Fahrzeugen, die im Stillstand bewohnt werden, wie Femverkehrs-Nutzfahrzeuge mit entsprechenden Schlafkabinen, Wohnmobile etc. kann sich in spezifischen Situationen, z. B. bei hoher Luftfeuchtigkeit, tiefen Außentemperaturen, Heizungsbetrieb, mehreren Personen im Fahrzeug, eine relativ große Menge an Kondenswasser bilden. Um ein Durchsickern des Kondenswassers vor allem durch die annähernd horizontal angeordneten Innenverkleidungsteile, wie z. B. Dachhimmel, zu vermeiden, sind diese Innenverkleidungsteile in der Regel an ihrer dem Dach bzw. der Außenwand des Fahrzeugs zugewandten Rückseite mit wasserundurchlässigem Vlies beschichtet. Das Kondenswasser sucht sich unkontrolliert seinen Weg zu den seitlichen Rändern dieser Innenverkleidungsteile und fließt dort irgendwie ab. Insbesondere an den Verbindungsstellen zweier benachbarter Innenverkleidungsteile kann das Kondenswasser zu deren dem Fahrzeug-Innenraum zugewandten Vorderseiten hin austreten oder aber von der - in der Regel - sichtseitig vorhandenen Textilbeschichtung entsprechend einer Dochtwirkung von der Rückseite der Innenverkleidungsteile zu deren Vorderseite gesaugt werden, was außer dem Feuchtigkeitseintritt in den Fahrzeug-Innenraum auch unschöne und in der Regel nicht mehr entfernbare Wasserflecken zur Folge hat.

Die US-A-4 445 721 beschreibt eine Wasserableitung an einer Fahrzeugtür. An der Innenseite der Tür ist ein Verkleidungselement angebracht, das an seiner Unterseite einen nach außen weisenden Rand aufweist. Das Wasser tropft vom diesem Rand in eine Rinne am Türschweller, die mit Abflußlöchern versehen ist.

Es ist daher Aufgabe der Erfindung, Vorkehrungen zu treffen, die den vorgeschilderten Problemen abhelfen und eine saubere Beseitigung von anfallendem Kondenswasser aus dem Fahrzeug ermöglichen.

Diese Aufgabe wird bei einem eingangs genannten Kraftfahrzeug erfindungsgemäß entsprechend dem Kennzeichen des Anspruchs 1 dadurch gelöst, dass ein Kondenswassersammel- und -ableitsystem vorgesehen ist, dass das Dach-Innenverkleidungsteil Bestandteil des Kondenswassersammel- und -ableitsystems ist und hierfür einen umlaufenden, nach unten gezogenen Außenrand aufweist sowie oberseitig im Hinblick auf eine gezielte Abführung von im Raum zwischen ihm und Dach anfallendem Kondenswasser zur Unterkante des heruntergezogenen Außenrandes hin ausgebildet ist, dass als weiterer Bestandteil des Kondenswassersammel- und -ableitsystems eine im Bereich der Unterkante des heruntergezogenen Außenrandes entweder an diesem oder einem anschließenden Verkleidungs- bzw. Verblendteil angeordnete Rinne vorgesehen ist, die ablaufendes Kondenswasser aufnimmt und an bestimmten Stellen Auslässe aufweist, über die das gesammelte Kondenswasser aus der Rinne aus- und in definierte Freiräume zwischen Außen- und Innenblech der Außenwand einleitbar ist, aus welchen Freiräumen das Kondenswasser kanalisiert nach unten ab- und aus dem Fahrzeug ausleitbar ist.

Vorteilhafte Ausgestaltungen und Details der erfindungsgemäßen Lösung sind in den Unteransprüchen angegeben. Auf deren Zitierung an dieser Stelle ist verzichtet, da deren Merkmale alle ihre Stütze in der Figurenbeschreibung haben.

Mit dem erfindungsgemäßen Kondenswasserableitungssystem ist es erstmalig möglich, das im Raum zwischen den Innenverkleidungsteilen und dem Außenblech des Fahrzeugs anfallende Kondenswasser gezielt zu sammeln und kanalisiert innerhalb des Fahrzeugs zu entsprechenden Auslässen hin- und aus letzteren abzuführen. Da aufgrund dieser Maßnahmen kein Kondenswasser mehr zur Vorderseite bzw. an die Textilkaschierung der Innenverkleidungsteile gelangen kann, bleiben diese von unschönen Wasserflecken verschont. Da anfallendes Kondenswasser von der höchsten Stelle des Dach-Innenverkleidungsteiles nach dem Quelle-Senke-Prinzip nach außen und unten abgeleitet wird und mehrere in der Rinne über deren Länge verteilt angeordnete Auslässe eine Abführung von gesammeltem Kondenswasser aus der Rinne an verschiedenen Orten ermöglichen, ist sichergestellt, dass die Kondenswasserableitung unabhängig von der jeweiligen Fahrzeuglage, also auch bei einem Schrägstand des Fahrzeugs, einwandfrei möglich ist.

Nachstehend ist die erfindungsgemäße Lösung anhand mehrerer in der Zeichnung dargestellter Ausführungsbeispiele noch näher erläutert. In der Zeichnung zeigen alle Figuren Ausschnitte aus einen beispielhaft zugrundegelegten Fahrerhaus eines Lastkraftwagens und im einzelnen folgendes:
- Fig. 1: einen Schnitt im Übergangsbereich zwischen Fahrerhaus-Außenwand und -Dach durch eine erste Ausführungsform der Erfindung,
- Fig. 2: einen Schnitt durch die Ausführungsform gemäß Fig. 1 an einer Stelle, an der Kondenswasser aus der Rinne abführbar ist,
- Fig. 3: ein Innenkleidungs- bzw.Verblendteil aus dem Ausführungsbeispiel gemäß Fig. 1 und 2 in perspektivischer Einzelansicht,
- Fig. 4: einen Schnitt im Übergangsbereich zwischen Fahrerhaus-Außenwand und -Dach durch eine zweite Ausführungsform der Erfindung,
- Fig. 5: einen Schnitt im Übergangsbereich zwischen Fahrerhaus-Vorderwand und -Dach durch eine dritte Ausführungsform der Erfindung,
- Fig. 6: einen Ausschnitt aus einem Bereich des Fahrzeugs ähnlich Fig. 5 durch eine vierte Ausführungsform der Erfindung.

In den Figuren sind gleiche bzw. einander entsprechende Teile mit gleichen Bezugszeichen gekennzeichnet.

In den Figuren sind als Teile des Fahrerhauses eines Lastkraftwagens mit 1 das Dach, mit 2 eine Außenwand (Seiten- oder Rückwand), mit 3 das Außenblech und mit 4 das Innenblech der Außenwand 2, mit 5 die Vorderwand, mit 6 die darin eingesetzte Windschutzscheibe, mit 7 der Übergangsbereich zwischen Dach 1 und Außenwand 2, mit 8 der dortige Außenblechabschnitt und mit 9 der dortige Innenblechabschnitt, mit 10 der Übergangsbereich zwischen Dach 1 und Vorderwand 5, mit 11 der dortige Außenblechabschnitt und mit 12 der dortige Innenblechabschnitt bezeichnet.

Das Dach 1 und sich dazu nach unten anschließende Abschnitte der Rück- und Seitenwände 2 sowie der Vorderwand 5 sind durch Innenverkleidungsteile 13, 14, 15 abgedeckt, die der Wärmedämmung und wohnlichen Ausgestaltung des Fahrzeug- bzw. Fahrerhaus-Innenraumes dienen und üblicherweise aus einem Baumwollfaservlies oder ähnlichen Materialien bestehen, deren generell mit 16 bezeichnete, dem Dach 1 bzw. der Außen- oder Vorderwand 2 bzw. 5 zugewandte Rückseite mit einer wasserundurchlässigen Schicht, z. B. Vlies, beschichtet ist und deren generell mit 17 bezeichnete, dem Innenraum des Fahrzeugs bzw. Fahrerhauses zugewandte Sichtseite in der Regel eine Textilbeschichtung in der gewünschten Farbe und mit dem gewünschten Design aufweist.

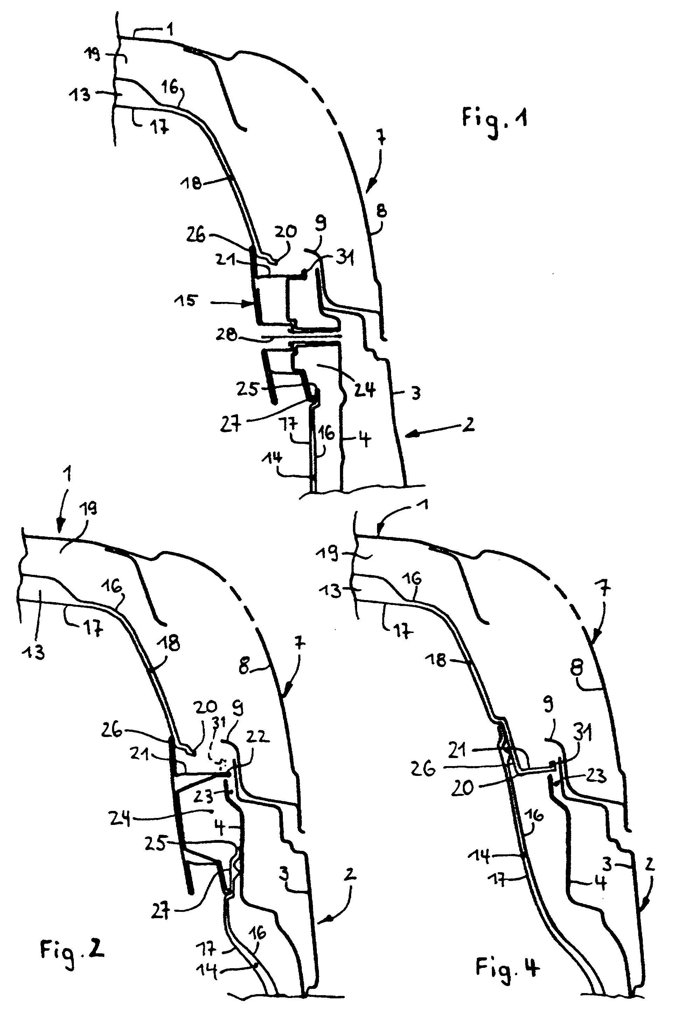

Erfindungsgemäß ist in dem Kraftfahrzeug ein Kondenswassersammel- und -ableitsystem vorgesehen. Ein Bestandteil desselben ist unter anderem das Dach-Innenverkleidungsteil 13. Dieses ist dem erfindungsgemäßen Zweck entsprechend ausgebildet und weist hierfür einen umlaufenden, nach unten gezogenen Außenrand 18 auf und ist oberseitig - also an seiner Rückseite 16 - im Hinblick auf eine gezielte Abführung von im Raum 19 zwischen ihm und Dach 1 anfallendem Kondenswasser zur Unterkante 20 des heruntergezogenen Außenrandes 18 hin ausgebildet. Als weiterer Bestandteil des erfindungsgemäßen Kondenswassersammel- und -ableitsystems ist eine im Bereich der Unterkante 20 des heruntergezogenen Außenrandes 18 entweder an diesem (siehe Fig. 4, 5, 6) oder einen anschließenden Verkleidungs- bzw. Verblendteil 15 (siehe Fig. 1, 2, 3) angeordnete Rinne 21 vorgesehen. Diese Rinne 21 nimmt das rückseitig des Dach-Innenverkleidungsteiles 13 gesammelte und über den Außenrand 18 nach unten fließende Kondenswasser auf. Außerdem weist diese Rinne 21 mehrere Auslässe 22 an bestimmten, geeigneten Stellen auf, über die das gesammelte Kondenswasser aus der Rinne 21 ausleitbar und in definierte Freiräume 23 zwischen dem Außenblech 3 und Innenblech 4 der Außenwand 2 einleitbar ist. Aus diesen Freiräumen 23 kann das eingeleitete Kondenswasser kanalisiert vorzugsweise durch jene Öffnungen nach unten ab- und aus dem Fahrzeug bzw. Fahrerhaus ausfließen, die im Zuge der Fertigung der Karosserie- bzw. des Rohfahrerhauses nach dem Tauchgrundieren das Ablaufen überschüssiger Farbe ermöglichen.

Nachstehend ist auf verschiedene Details der erfindungsgemäßen Lösung und der verschiedenen Ausführungsbeispiele näher eingegangen.

Das Dach-Innenverkleidungsteil 13 selbst, zumindest aber dessen Rückseite 16 ist leicht konvex gewölbt und vorzugsweise auch mit einer Anzahl von Rinnen ausgestattet, die zum Außenrand 18 hinführen, so dass die Sammlung und Abführung von entstandenem Kondenswasser dem Quelle-Senke-Prinzip gehorchend von der höchsten Stelle der Rückseite des Dach-Innenverkleidungsteiles 13 aus zu dessen tieferliegendem Außenrand 18 und über diesen zu der sich unten anschließenden Rinne 21 hin erfolgt.

Bei dem Ausführungsbeispiel gemäß Fig. 1, 2, 3 ist die Rinne 21 rückseitig außen an dem Innenverkleidungs- bzw. Verblendteil 15 angeordnet und ragt in einen Freiraum 24 hinein, der zwischen der Unterkante 20 des Dach-Innenverkleidungsteils 13 und der Oberkante 25 des Außenwand-Innenverkleidungsteils 14 gegeben ist. Das Innenverkleidungs- bzw. Verblendteil 15 stützt sich dabei mit seinem oberen Randbereich am unteren Randbereich 26 des Außenrandes 20 am Dach-Innenverkleidungsteil 13 und mit seiner Unterkante am oberen Randbereich 27 des Außenrand-Innenverkleidungsteils 14 ab. Schraub- oder spezielle Dübel-Clips-Verbindungen 28 dienen zur Befestigung des Innenverkleidungs- bzw. Verblendteils 15 am Innenblech 4 der Außenwand 2. Wie aus Fig. 1 und 2 ersichtlich, erstreckt sich die Rinne 21 mit einem gewissen vertikalen Abstand von der Unterkante 20 am Dach-Innenverkleidungsteil 13. Die Unterkante 20 in den Bereich der Rinne 21 hineingerichtet und bildet in diesem Fall eine Tropfkante für das von oben ankommende Kondenswasser.

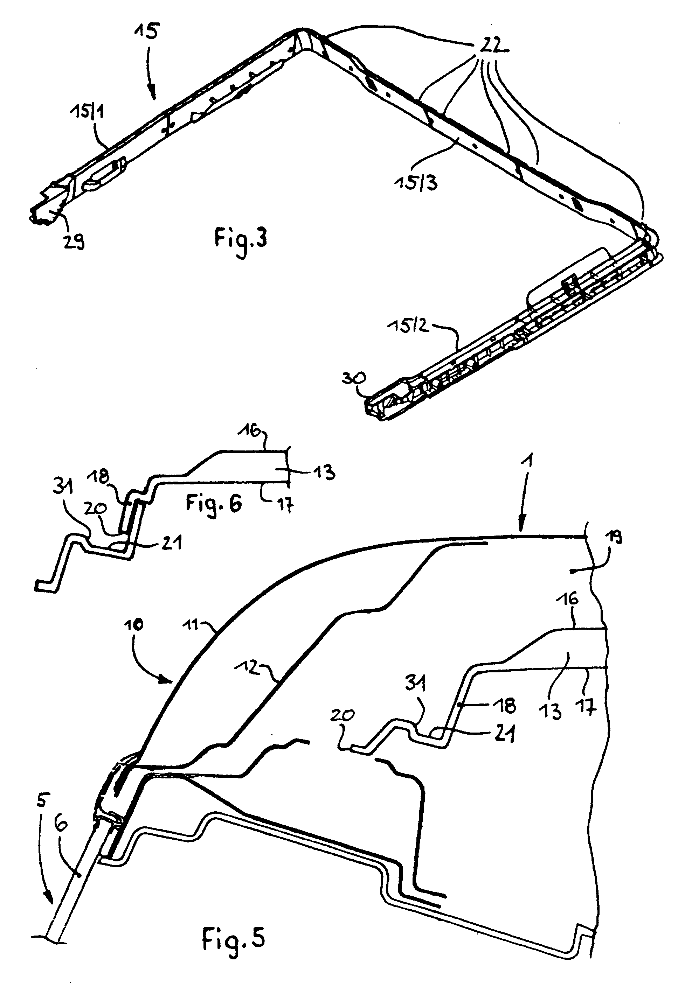

Aus Fig. 3 ist das Innenverkleidungs- bzw. Verblendteil 15 in Alleinstellung ersichtlich. Dieses U-förmige und aus mehreren Einzelteilen zusammengesetzte Gebilde erstreckt sich mit seinen beiden Schenkeln 15/1 und 15/2 entlang der rechten bzw. linken Außenseite 2 des Fahrerhauses und mit seinem hinteren Schenkel 15/3 entlang der Rückwand 2 des Fahrerhauses. Nach vorne ist dieses U-förmige Gebilde zur Vorderwand des Fahrerhauses hin offen. Die vorderen Enden 29 bzw. 30 der Schenkel 15/1, 15/2 sind für Anschluss und Befestigung derselben im Bereich der beiden A-Säulen des Fahrerhauses ausgebildet. Die Auslässe 22 sind an diesem Innenverkleidungs- bzw. Verblendteil 15 nur im Bereich des Schenkels 15/3, also der Rückwand des Fahrerhauses vorgesehen.

Im Fall des Ausführungsbeispiels gemäß Fig. 4 bildet die Rinne 21 den unteren Abschluss des heruntergezogenen Außenrandes 18 des Dach-lnnenverkleidungsteils 13. Diesem Beispiel liegt ein anderes Montage- und Innenverkleidungskonzept zugrunde, wobei sich das Außenwand-Innenverkleidungsteil 14 mit seinem oberen Bereich direkt innen am hier etwas eingezogenen unteren Randbereich 26 am Dach-Innenverkleidungsteil 13 abstützt. Die Rinne 21 kann dabei am Dach-Innenverkleidungsteil 13 außen umlaufend entweder einstückig an diesem oder als vorgefertigtes ein- oder mehrstückiges Teil am Dach-Innenverkleidungsteil befestigt, beispielsweise angeklebt sein.

Fig. 5 zeigt ein Beispiel für die Ausgestaltung der Rinne 21 im Bereich der der Vorderwand 5 zugewandten Vorderseite des Dach-Innenverkleidungsteils 13. Die Rinne 21 bildet dabei nicht den unteren Abschluss des Außenrandes 18. Vielmehr ist dort dieser Abschnitt der Rinne 21 von der Unterkante 20 des Dach-lnnenverkleidungsteiles 13 etwas nach oben gerückt angeordnet und von vorne gesehen bogenförmig gekrümmt verlaufend ausgebildet. Das gesammelte Kondenswasser kann somit von der höchsten, etwa in der Längsmittelebene des Fahrzeugs liegenden Stelle dieses Abschnitts der Rinne 21 dem Quelle-Senke-Prinzip gehorchend zu tieferliegenderen seitlichen Außenbereichen der Rinne 21 hin fließen und dort in Rinnenbereiche eintreten, die längs der seitlichen Außenwände 2 verlaufend gegeben sind. Die Rinne 21 ist im dargestellten Vorderbereich durch einen randbildenden Auβenwandabschnitt 31 begrenzt und einstückig am Dach-Innenverkleidungsteil 13 ausgebildet. Im Fall gemäß Fig. 6 dagegen ist dieser vordere Abschnitt der Rinne 21 als vorgefertigtes, ein- oder mehrteiliges Gebilde am Dach-Innenverkleidungsteil 13, dort am entsprechend ausgebildeten unteren Randbereich des Außenrandes 18 befestigt, vorzugsweise angeklebt.

Die Auslässe 22 an der Rinne 21 sind auf verschiedene Art und Weise realisierbar, z. B. durch Bohrungen bzw. Löcher im Rinnenboden oder schnabelartige Gebilde in der Rinnenaußenwand 31, die jeweils oberhalb von Eintrittsöffnungen zu den Freiräumen 23 angeordnet sind bzw. dort ausmünden.

## Patentansprüche

1. Kraftfahrzeug, insbesondere Lastkraftwagen, dessen Dach und daran nach unten anschließende Außenwandabschnitte durch Innenverkleidungsteile abgedeckt sind, **dadurch gekennzeichnet, dass** ein Kondenswassersammel- und -ableitsystem vorgesehen ist, dass das Dach-lnnenverkleidungsteil (13) ein Bestandteil des Kondenswassersammel- und -ableitsystems ist und hierfür einen umlaufenden, nach unten gezogenen Außenrand (18) aufweist sowie oberseitig im Hinblick auf eine gezielte Abführung von im Raum (19) zwischen ihm und Dach (1) anfallendem Kondenswasser zur Unterkante (20) des heruntergezogenen Außenrandes (18) hin ausgebildet ist, dass als weiterer Bestandteil des Kondenswassersammel- und -ableitsystems eine im Bereich der Unterkante (20) des heruntergezogenen Außenrandes (18) entweder an diesem oder einem anschließenden Verkleidungs- oder Verblendteil (15) angeordnete Rinne (21) vorgesehen ist, die ablaufendes Kondenswasser aufnimmt und an bestimmten Stellen Auslässe (22) aufweist, über die das gesammelte Kondenswasser aus der Rinne (21) aus- und in definierte Freiräume (23) zwischen Außen- und Innenblech (3, 4) der Außenwand (2) einleitbar ist, aus welchen Freiräumen (13) das Kondenswasser kanalisiert nach unten ab- und aus dem Fahrzeug ausleitbar ist.

2. Kraftfahrzeug nach Anspruch 1, **dadurch gekennzeichnet, dass** zwischen dem unteren Randbereich (26) des Dach-Innenverkleidungsteils (13) und dem oberen Rand (27) eines Außenwandabschnitt-Innenverkleidungsteils (14) ein durch ein Innenverkleidungs- bzw. Verblendteil (15) überbrückter bzw. abgedeckter Freiraum (24) gegeben ist, und dass die Kondenswasser sammelnde Rinne (21) außen an dem Innenverkleidungs- bzw. Verblendteil (15) angeordnet ist und in den besagten Freiraum (24) hineinragt.

3. Kraftfahrzeug nach Anspruch 1, **dadurch gekennzeichnet, dass** die Kondenswasser sammelnde Rinne (21) den unteren Abschluss des heruntergezogenen Außenrandes (18) des Dach-Innenverkleidungsteiles (13) bildet oder in dessen unteren Bereich angeordnet ist und entweder einstückig an diesem ausgebildet oder als vorgefertigtes, ein- oder mehrteiliges Bauteil dort befestigt ist.

4. Kraftfahrzeug nach einem der Ansprüche 1 und 2 , **dadurch gekennzeichnet, dass** die Unterkante (20) des Dach-Innenverkleidungsteiles (13) als in den Bereich der Rinne (21) hineingerichtete Tropfkante ausgebildet ist.

5. Kraftfahrzeug nach Anspruch 1, **dadurch gekennzeichnet, dass** das Dach-Innenverkleidungsteil (13), zumindest aber dessen dem Dach(1) zugewandte Rückseite (16) leicht konvex gewölbt und gegebenenfalls mit einer Anzahl von Rinnen ausgestattet ist, die für Sammlung und Abführung von Kondenswasser dem Quelle-Senke-Prinzip gehorchend zum Außenrand (18) hinführen.

## Claims

1. Motor vehicle, particularly motor-driven truck, having a roof and the contiguous, below-roof sections of the exterior wall covered by interior-trim panels, **characterised in that** a condensation collection and removal system is provided, that the headliner (13) is a constituent part of the condensation collection and removal system and evinces for this purpose on all sides a downward-extending outer rim (18) and an upper face shaped specifically in order to remove condensation from the airspace (19) between it and the roof (1) toward the bottom edge (20) of the downward-extending outer rim (18), and that as another constituent part of the condensation collection and removal system a gutter (21) is provided at the bottom edge (20) of the downward-extending outer rim (18), said gutter being located either on the downward-extending outer rim (18) or on a contiguous trim panel or finisher (15) to accommodate the drained condensation and having at certain points drain apertures (22) through which the collected condensation can be channelled out of the gutter (21) and into defined spaces (23) between the outer and inner panels (3, 4) of the exterior wall (2), from which spaces (23) the condensation can be channelled downward and discharged from the vehicle.

2. Motor vehicle according to Claim 1, **characterised in that** between the bottom edge zone (26) of headliner (13) and the top edge (27) of an exterior-wall-section trim panel (14) a space (24) is provided, concealed or bridged by an interior trim panel or finisher (15), and that the condensation-collecting gutter (21) is located on the outside of the interior trim panel or finisher (15) and projects into said space (24).

3. Motor vehicle according to Claim 1, **characterised in that** the condensation-collecting gutter (21) constitutes the bottom lip of the downward-extending outer rim (18) of the headliner (13) or is located toward the bottom of said headliner (13) and is either formed as a part of said headliner (13) or is secured to it as a preformed, one-part or multiple-part component.

4. Motor vehicle according to either of Claims 1 and 2, **characterised in that** the bottom edge (20) of the headliner (13) is formed as a drip edge oriented into the area of the gutter (21).

5. Motor vehicle according to Claim 1, **characterised in that** the headliner (13) or at least its rear side (16) facing toward the roof (1) is slightly convex and, if necessary, evinces a number of gutters which, for the purposes of collecting and removing condensation on the source-sink principle, are channels leading to the outer rim (18).

## Revendications

1. Véhicule automobile, en particulier camion, dont le toit et les pans de la paroi extérieure qui lui sont adjacents vers le bas sont recouverts d'éléments de garniture intérieure, **caractérisé en ce qu'**il est prévu un système de collecte et d'évacuation de l'eau de condensation, que l'élément de garniture intérieure (13) du toit fait partie intégrante du système de collecte et d'évacuation de l'eau de condensation, présente à cet effet un bord extérieur périphérique s'étirant vers le bas (18) et, dans l'optique d'une évacuation adéquate de l'eau de condensation apparaissant dans l'espace (19) compris entre lui et le toit (1), est conformé en direction de l'arête inférieure (20) du bord extérieur s'étirant vers le bas (18), qu'il est prévu comme autre élément constitutif du système de collecte et d'évacuation de l'eau de condensation une gouttière (21) disposée au niveau de l'arête inférieure (20) du bord extérieur s'étirant vers le bas (18), soit au niveau de ce dernier, soit à celui d'un élément adjacent de garniture ou de parement (15), laquelle gouttière (21) recueille l'eau de condensation qui s'écoule et présente en certains points des trous d'évacuation (22) par lesquels l'eau de condensation collectée peut être évacuée de la gouttière (21) et acheminée dans des interstices (23) définis entre tôles extérieure et intérieure (3, 4) de la paroi extérieure (2), d'où elle est canalisée vers le bas et peut être évacuée du véhicule.

2. Véhicule automobile suivant la revendication 1, **caractérisé en ce qu'**entre le bord inférieur (26) de l'élément de garniture intérieure (13) du toit et le bord supérieur (27) d'un élément de garniture intérieure (14) des pans de la paroi extérieure, est prévu un interstice (24) ponté ou recouvert par un élément de garniture intérieure ou de parement (15), et que la gouttière (21) collectant l'eau de condensation est disposée à l'extérieur de l'élément de gamiture intérieure ou de parement (15) et pénètre en saillie dans ledit interstice (24).

3. Véhicule automobile suivant la revendication 1, **caractérisé en ce que** la gouttière (21) collectant l'eau de condensation forme l'extrémité inférieure du bord extérieur s'étirant vers le bas (18) de l'élément de garniture intérieure (13) du toit ou est disposée à la partie inférieure de ce dernier et qu'elle est soit d'un seul tenant avec ce dernier soit fixée à ce niveau sous forme de pièce préfabriquée d'un seul ou de plusieurs tenants.

4. Véhicule automobile suivant l'une des revendications 1 et 2, **caractérisé en ce que** l'arête inférieure (20) de l'élément de garniture intérieure (13) du toit se présente sous forme de larmier dirigé vers l'intérieur de la zone de la gouttière (21).

5. Véhicule automobile suivant la revendication 1, **caractérisé en ce que** l'élément de garniture intérieure (13) du toit, tout au moins son dos (16) dirigé vers le toit (1), est légèrement convexe et, le cas échéant, doté d'un certain nombre de goulottes qui, pour la collecte et l'évacuation de l'eau de condensation, obéissant au principe source/puits, conduisent au bord extérieur (18).
